# EUROPEAN PATENT SPECIFICATION

(11) **EP 1 929 914 B1**
(45) Date of publication and mention of the grant of the patent: **22.12.2010**
(21) Application number: 07012251.0
(22) Date of filing: 22.06.2007
(51) Int. Cl.: A47L 9/00

(54) **Fan motor case assembly for noise reduction**
Gehäuseanordnung für einen Lüftermotor zur Geräuschminderung
Ensemble de carter de moteur de ventilateur pour la reduction du bruit

(30) Priority: 06.12.2006 KR 20060123110
(43) Date of publication of application: 11.06.2008
(73) Proprietor: Samsung Gwangju Electronics Co., Ltd., Gwangju-city (KR)
(72) Inventor: Jeon, Kyoung-hui, Seosan-si Chungcheongnam-do (KR); Hong, Seung-gee, Suwon-si Gyeonggi-do (KR); OH, Hyun-jun, Gwangju-city (KR); Lee, Jun-hwa, Suwon-si Gyeonggi-do (KR)
(74) Representative: Käck, Jürgen

(56) References cited:
- EP-A- 0 453 296
- DE-A1- 3 402 603
- DE-A1- 19 843 719
- JP-A- 5 049 561
- JP-U- 49 135 171
- US-A- 4 356 591
- US-A1- 2006 213 022

## Description

### BACKGROUND OF THE INVENTION

### 1. Field of the Invention

The present disclosure relates to a fan motor, more particularly, to a fan motor case assembly having the same.

### 2. Description of the Related Art

Generally, a fan motor is used for sucking air and includes a blade part and a motor for rotating the blade part.

The fan motor is used as a sucking force generator in a vacuum cleaner which sucks dust and dirt together with air. The fan motor used in the vacuum cleaner includes an impeller having a plurality of blades and a motor for rotating the impeller. Therefore, when the motor is rotated, air is sucked by rotation of the impeller and then discharged to the motor.

In general, when sucking and discharging the air, the fan motor generates a noise due to the discharged air, and thus the vacuum cleaner using the fan motor also generates the noise. However, since the vacuum cleaner is typically used in a room, it is required to reduce the noise. To this end, noise reduction in the fan motor is the most effective.

Two examples are given in US 4356591 and DE 3402603.

Therefore, in order to reduce the noise in the fan motor, it is required to provide a method and apparatus for reducing the noise in the fan motor due to the discharged air.

### SUMMARY OF THE INVENTION

The present disclosure has been developed in order to overcome the above drawbacks and other problems associated with the conventional arrangement. An aspect of the present disclosure is to provide a fan motor case assembly which can reduce the noise due to the discharged air and effectively use a space of the motor case.

The above aspect and/or other features of the present disclosure can substantially be achieved by providing a fan motor case assembly comprising a fan motor; a porous case formed to enclose a part of the fan motor from which air is discharged and having a plurality of through-holes; an inner case formed to enclose the fan motor and the porous case and guiding the air passed through the porous case to be directed downwardly; an outer case disposed to enclose the inner case with a gap; and a plurality of air paths formed between the outer case and the inner case so as to discharge the air discharged from a lower side of the inner case to an outside of the outer case.

Preferably, the fan motor case assembly of claim 1, further comprising a porous plate disposed at a lower side of the inner case.

Herein, the plurality of air paths are formed by a plurality of blocking members, and the plurality of air paths are respectively provided with a guiding member for guiding the air discharged from the inner case to be moved upwardly and then discharged to a lower side of the outer case.

According to an embodiment of the present disclosure, it is preferred that the plurality of air paths includes two air paths.

Further, the fan motor case assembly of the present disclosure further comprises a filter member disposed at the lower side of the outer case to filter the air discharged from the outer case; and a base disposed at a lower side of the filter member to guide the air passed through the filter member to be discharged to a side surface thereof

Another aspect of the present disclosure is to provide a fan motor case assembly comprising a fan motor; a porous case formed to enclose a part of the fan motor from which air is discharged and having a plurality of through-holes; an inner case formed to enclose the fan motor and the porous case and guiding the air passed through the porous case to be directed downwardly, an outer case disposed to enclose the inner case with a gap and having a bottom plate for supporting a lower end of the inner case; and a plurality of air paths formed between the outer case and the inner case so as to guide the air discharged from a lower side of the inner case to be moved upwardly and then discharged to a lower side of the outer case.

The plurality of air paths are formed by a plurality of blocking members formed to protrude from the inner case and to contact an upper surface and a side surface of the outer case; and a guiding member formed to protrude from the inner case between the plurality of blocking members and to contact the side surface of the outer case and also formed to be apart from the upper surface of the outer case.

Further, the bottom plate between the blocking member and the guiding member is formed with an air hole.

Further, the fan motor case assembly further comprises a porous plate disposed between the lower end of the inner case and the bottom plate. Further, the fan motor case assembly of the present disclosure further comprises a filter member disposed at a lower side of the bottom plate; and a base for supporting the outer case and the filter member and discharging the air passed through the filter member to a side surface thereof, wherein a lower end of the outer case is downwardly extended more than the bottom plate.

Furthermore, the fan motor case assembly of the present disclosure further comprises a lower buffer member disposed at the bottom plate of the outer case to support the fan motor.

Further, the outer case comprises an upper outer case and a lower outer case.

Other objects, advantages and salient features of the disclosure will become apparent from the following detailed description, which, taken in conjunction with the annexed drawings, discloses preferred embodiments of the disclosure.

### BRIEF DESCRIPTION OF THE DRAWINGS

These and/or other aspects and advantages of the disclosure will become apparent and more readily appreciated from the following description of the embodiments, taken in conjunction with the accompanying drawings of which:

Fig. 1 is a perspective view illustrating a fan motor case assembly according to an embodiment of the present disclosure;

Fig. 2 is an exploded perspective view illustrating the fan motor case assembly of Fig. 1;

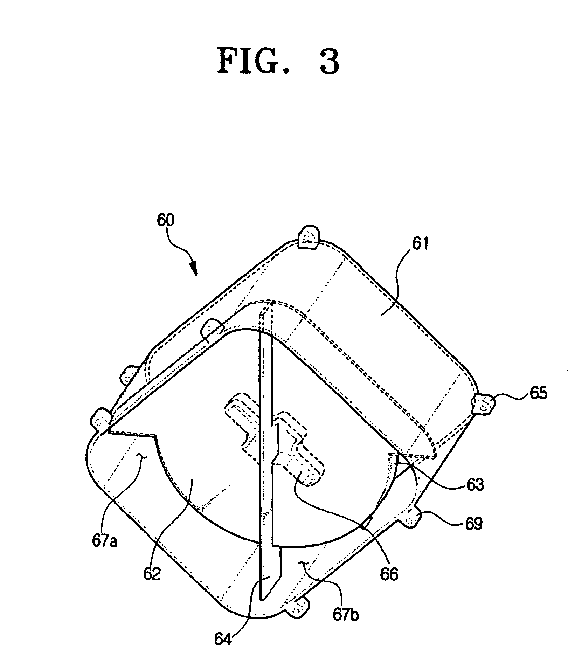

Fig. 3 is a lower perspective view illustrating an outer case of the fan motor case assembly of Fig. 1;

Fig. 4 is a cross-sectional view illustrating the fan motor case assembly of Fig. 1;

Fig. 5 is a perspective view illustrating air flowing in an air path of the fan motor case assembly of Fig. 1;

Fig. 6 is a bottom view illustrating a status when the air is discharged to the outer case of the fan motor case assembly of Fig. 3; and

Fig. 7 is a schematic cross-sectional view illustrating a vacuum cleaner using the fan motor case assembly according to the present disclosure.

Throughout the drawings, like reference numerals will be understood to refer to like parts, components and structures.

### DETAILED DESCRIPTION OF THE EXEMPLARY EMBODIMENTS

Hereinafter, certain exemplary embodiments of the present disclosure will be described in detail with reference to the accompanying drawings.

The matters defined in the description, such as a detailed construction and elements thereof, are provided to assist in a comprehensive understanding of the disclosure. Thus, it is apparent that the present disclosure may be carried out without those defined matters. Also, well-known functions or constructions are omitted to provide a clear and concise description of exemplary embodiments of the present disclosure.

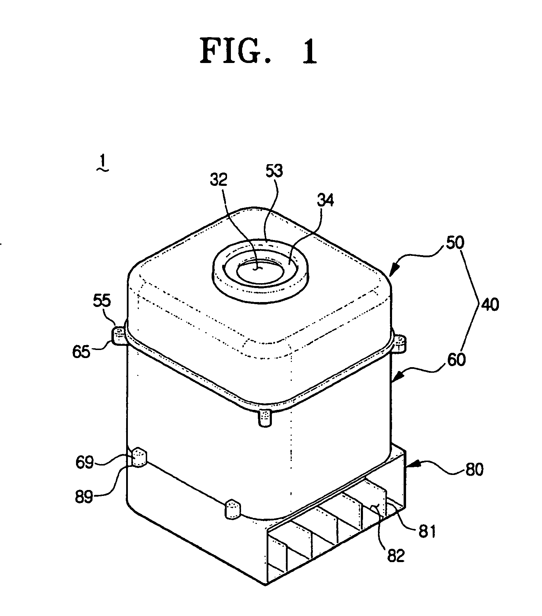

Referring to Figs. 1, 2 and 4, a fan motor case assembly 1 according to an embodiment of the present disclosure includes a fan motor 10, a porous case 20, an inner case 30, an outer case 40 and a plurality of air paths 91 and 92.

The fan motor 10 is provided with an impeller 11 having a plurality of blades (not shown) and a motor 15 disposed at a lower side of the impeller 11 to rotate the impeller 11. Since the motor 15 and the impeller 11 have the same functions and constructions as conventional ones, the descriptions thereof will be omitted.

An air inlet 12 is formed in an upper surface of the impeller 11 of the fan motor 10, and a plurality of air outlets 16 are formed at a lower side of the motor 15. Therefore, air sucked by rotation of the impeller 11 is introduced through the air inlet 12 of the fan motor 10 and discharged through the air outlets 16 disposed at the lower side of the motor 15.

The porous case 20 having a cylindrical shape with a bottom surface is disposed to enclose the motor 15 of the fan motor 10 and formed with a plurality of through-holes 22 at a side surface 21 thereof That is, the porous case 20 is disposed to be apart from the plurality of air outlet 16 through which the air is discharged from the fan motor 10 at a distance and to enclose the motor 15 of the fan motor 10. Therefore, the air discharged from the air outlet 16 of the fan motor 10 is discharged to the outside of the porous case 20 through the through-holes 22 of the porous case 20. Further, it is preferred that an upper end 23 of the porous case 20 is formed into a flange so as to prevent the air discharged through the through-holes 22 from being moved to the impeller 11. The flange 23 has an outer diameter corresponding to an inner diameter of the inner case 30. A cushion hole 24 is formed in a lower surface of the porous case 20 so that a lower buffer member 19 disposed on a bottom plate 62 of the outer case 40 can elastically support a lower end of the fan motor 10 through the cushion hole 24.

The inner case 30 encloses the fan motor 10 and the porous case 20 and functions to guide the air passing through the plurality of through-holes 22 of the porous case 20, downwardly. The inner case 30 has a cylindrical shape of which an upper side is blocked up and also has an inner diameter which is larger than an outer diameter of the porous case 20. Preferably, the inner diameter of the inner case 30 corresponds to the outer diameter of the flange part 23. That is, the inner diameter of the inner case 30 is determined so that the air is prevented from flowing out between the inner case 30 and the flange 23 of the porous case 20 in a status when the porous case 20 is received in the inner case 30. Preferably, the inner diameter of the inner case 30 is gradually increased from an upper side toward a lower side of the inner case 30.

Further, an inlet air opening 32 is formed in an upper surface of the inner case 30 so as to communicate with the air inlet 12 of the fan motor 10. Around a circumference of the inlet air opening 32, there is formed a buffer positioning place 34 in which a ring-shaped internal upper buffer member 37B is provided to prevent vibration generated from the fan motor 10 from being transferred to the inner case 30. The internal upper buffer member 37B is formed of a material which can absorb the vibration of the fan motor 10.

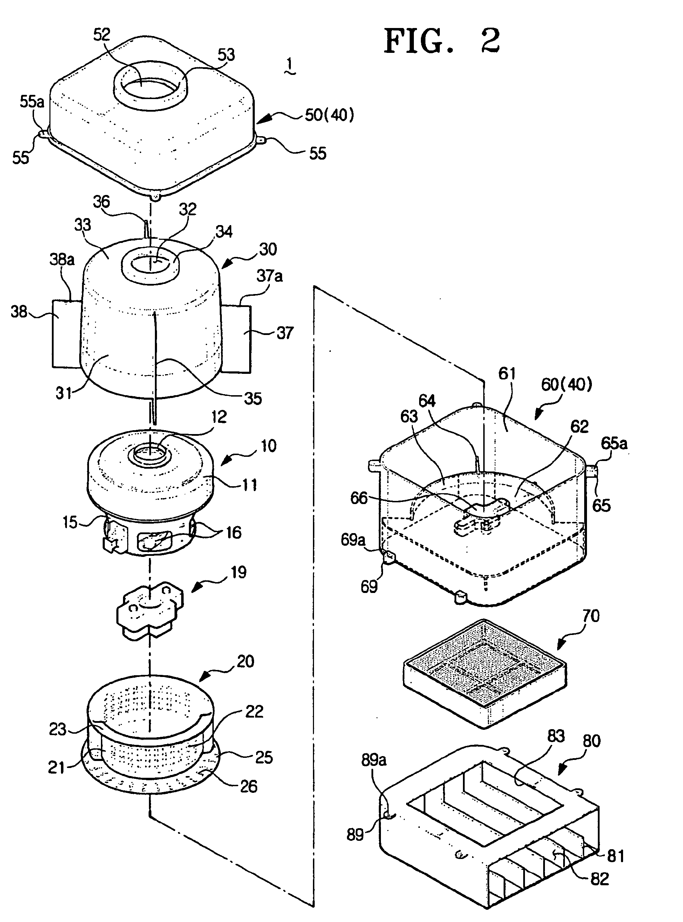

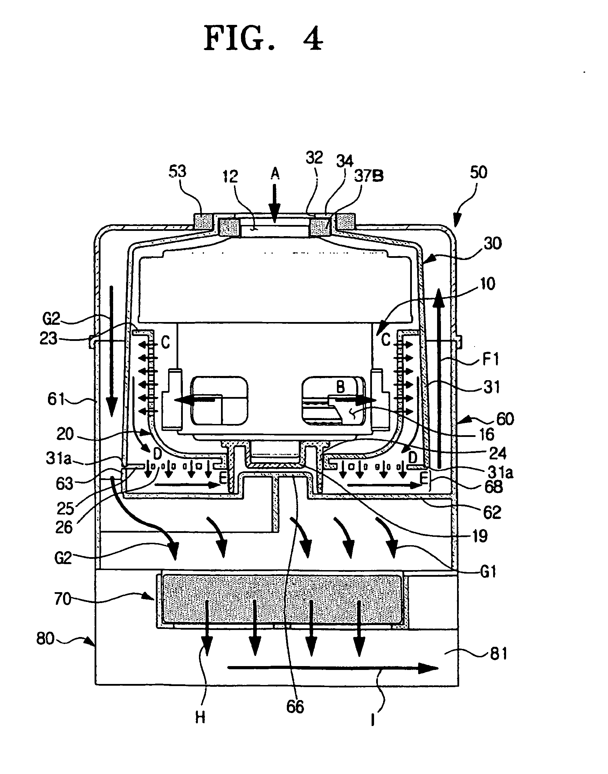

A porous plate 25 may be provided at a lower side of the inner case 30. The porous plate 25 has a diameter corresponding to the outer diameter of the inner case 30 and also has a plurality of through-holes 26. Thus, the air discharged to the lower side of the inner case 30 passes through the porous plate 25. The cushion hole 24 is formed in a center portion of the porous plate 25 and the lower buffer member 19 passes through the cushion hole 24. As shown in Figs. 2 and 4, the porous plate 25 can be integrally formed with the porous case 20. Alternatively, the porous plate 25 may be separately formed from the porous case 20.

The outer case 40 encloses the inner case 30 with a desired gap. In case of the fan motor case assembly 1 of the embodiment, the outer case 40 has a square case shape. However, it may be formed into a cylindrical case. The outer case 40 comprises an upper outer case 50 and a lower outer case 60.

The upper outer case 50 is assembled to enclose an upper side of the inner case 30 and has an upper air opening 52 at a center portion thereof The upper air opening 52 is formed so that the buffer positioning place 34 of the inner case 30 can pass therethrough. An external upper buffer member 53 is provided at the upper air opening 52 so as to prevent the vibration from being transferred between the upper outer case 50 and the inner case 30. A plurality of upper fixing brackets 55 are formed at an outer circumference of the upper outer case 50, and each of the upper fixing brackets 55 is formed with a fixing hole 55a.

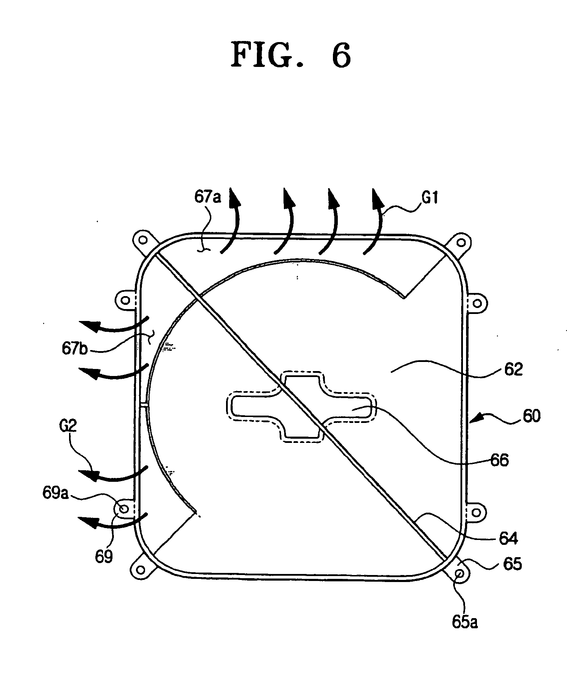

The lower outer case 60 is assembled to enclose a lower side of the inner case 30 and formed into a square case shape which is the same as the upper outer case 50. The bottom plate 62 is provided at a lower side of the lower outer case 60 so as to support a lower portion 31a of the inner case 30. On an upper surface of the bottom plate 62, there is formed a supporting bracket 63 which has the same diameter as the lower portion 31a of the inner case 30 and which protrudes upwardly so that a desired gap is formed between the lower portion 31 a of the inner case 30 and the bottom plate 62. Herein, as shown in Fig. 2, it is preferred that the support bracket 63 is formed into an arc shape which can support about a half portion of the lower portion 31 a of the inner case 30. When the inner case 30 is placed on the support bracket 63, there is formed a bottom space 68 between the lower portion 31a of the inner case 30 and the bottom plate 62 at a part at which the support bracket 63 does not exist. Therefore, the air discharged through the porous plate 25 is discharged through the bottom space 68 to the outside of the inner case 30, i.e., by a plurality of air paths 91 and 92. At the bottom plate 62 between the support bracket 63 and a side surface 61 of the lower outer case 60 which is opposite to a place where the bottom space 68 is formed, there are formed a plurality of air holes 67a and 67b corresponding to the plurality of air paths 91 and 92 (referring to Fig. 6). Therefore, the air discharged from the bottom space 68 is discharged below the lower outer case 60 through the plurality of air paths 91 and 92 and air holes 67a and 67b.

Meanwhile, a supporting part 66 is formed at a center portion of the bottom plate 62 so as to fix the lower buffer member 19. The lower buffer member 19 is interposed between the bottom plate 62 and the lower side of the fan motor 10 and functions to prevent the vibration of the fan motor 10 from being transferred to an outside through the bottom plate 62. The lower buffer member 19 is formed of a material like rubber which can absorb the vibration. And a reinforcement bracket 64 may be further provided at a lower side of the bottom plate 62 to reinforce strength of the bottom plate 62.

Moreover, the side surface 61 of the lower outer case 60 may be extended to a lower side of the reinforcement bracket 64 and the bottom plate 62. In this case, below the bottom plate 62, there is formed a space surrounded by the side surface 61 of the lower outer case 60.

A plurality of lower fixing brackets 65 are formed at an upper outer circumference of the lower outer case 60 so as to be correspondent to the plurality of upper fixing brackets 55 of the upper outer case 50. Each of the lower fixing brackets 65 is formed with a fixing hole 65a. Therefore, the upper outer case 50 and the lower outer case 60 are coupled to each other by using their brackets 55 and 65 and fastening elements. In addition, a plurality of case brackets 69 are formed at a lower outer circumference of the lower outer case 60 so as to fasten the lower outer case 60 to a base 80, and each of the case brackets 69 is formed with a fixing hole 69a.

The plurality of air paths 91 and 92 are formed at a space between the outer case 40 and the inner case 30 to guide the air discharged to the lower side of the inner case 30 to the outside of the outer case 40. The plurality of air paths 91 and 92 are formed by an inner side of the side surface 61 of the outer case 40, an outer side of the side surface 31 of the inner case 30 and a plurality of blocking members 35 and 36 disposed at a space between the outer and inner cases 40 and 30. In the embodiment, the plurality of blocking members 35 and 36 are integrally formed with the inner case 30. In other words, the plurality of blocking members 35 and 36 are formed into thin plates which vertically protrude from the side surface 31 of the inner case 30 to contact the side surface of the outer case 40.

The plurality of blocking members 35 and 36 are formed to be correspondent to the plurality of air paths 91 and 92. In the embodiment, since the fan motor case assembly 1 has two air paths 91 and 92, two blocking members 35 and 36 are provided. Preferably, the two blocking members 35 and 36 are arranged at an angle of 180 degrees so as to divide the space between the inner and outer cases 30 and 40 into two parts. In the embodiment, the two blocking members 35 and 36 are positioned on a diagonal line connecting opposite corners of the square outer case 40. Therefore, the two air paths 91 and 92, i.e., first and second air paths are formed by the two blocking members 35 and 36, the side surface 31 of the inner case 30 and the side surface of the outer case 40. Preferably, when the upper outer case 50 covers the inner case 30, upper ends 35a and 36a of the blocking members 35 and 36 are in contact with an upper surface of the upper outer case 50. Thus, it is prevented that the air flowing in one of the air paths 91 and 92 is mixed with the air flowing in the other air path 92 and 91.

Guiding members 37 and 38 are disposed at a center portion of each air path 91, 92, i.e., about a center portion between the blocking member 35 and 36. Therefore, the two guiding members 37 and 38 disposed at the first and second air paths 91 and 92 are arranged at an angle of 180 degrees, and thus they are placed at an angle of 90 degrees with respect to each of the blocking members 35 and 36. In the embodiment, the two guiding members 37 and 38 are arranged on the other diagonal line of the outer case 40 which is not correspondent to the blocking members 35 and 36.

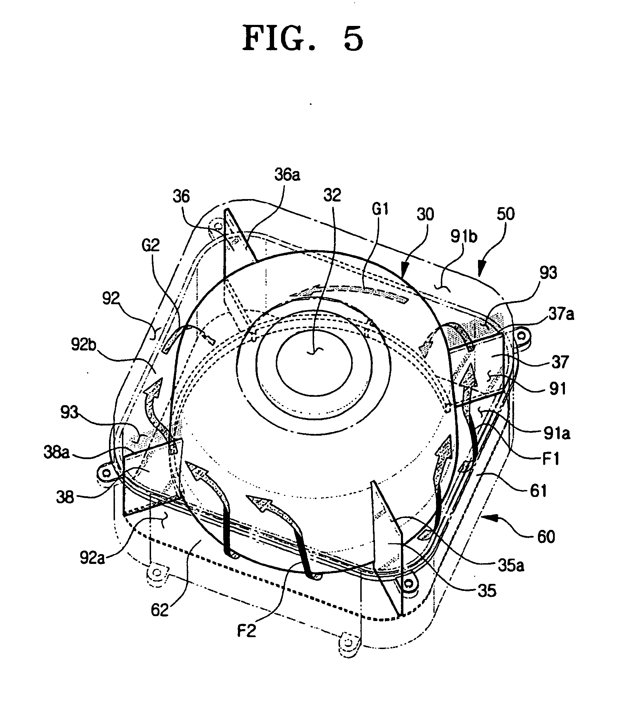

The guiding members 37 and 38 are formed into thin plates which vertically protrude from the side surface 31 of the inner case 30 to be in contact with the side surface of the outer case 40. Furthermore, upper ends 37a and 38a of the guiding members 37 and 38 are apart from the upper surface of the upper outer case 50. In other words, the guiding members 37 and 38 have a lower height than the blocking members 35 and 36. Therefore, the first and second air paths 91 and 92 are respectively partitioned into two spaces 91 a, 91 b and 92a, 92b by the guiding members 37 and 38, and the two spaces 91 a, 91 b and 92a, 92b communicate with each other through an upper gap 93 (referring to a shade part of Fig. 5) between the upper ends 37a and 38a of the guiding members 37 and 38 and the upper surface of the upper outer case 50. Herein, the two spaces 91 a, 91 b and 92a, 92b forming the first and second air paths 91 and 92 includes first and second front air paths 91 a and 92a through which the air is introduced and a first and second rear air paths 91 b and 92b through which the air is discharged.

The first and second front air paths 91 a and 92a communicate with the bottom space 68 between the bottom plate 62 and the lower side of the inner case 30, and the air holes 67a and 67b are formed in the bottom plate 62 corresponding to the first and second rear air paths 91 b and 92b (referring to Fig. 6). Therefore, the air passing through the bottom space 68 flows upwardly toward the upper gap 93 between the upper ends 37a and 38a of the guiding members 37 and 38 and the upper surface of the upper outer case 50 in the first and second front air paths 91 a and 92a and then flows downwardly toward the air holes 67a and 67b of the bottom plate 62 in the first and second rear air paths 91 b and 92b.

In the embodiment, the blocking members 35 and 36 and the guiding members 37 and 38 are integrally formed with the inner case 30. However, the blocking members 35 and 36 and the guiding members 37 and 38 may be integrally formed with the outer case 40.

According to an embodiment of the present disclosure, the fan motor case assembly 1 may further include a filter member 70 and the base 80. The filter member 70 and the base 80 are disposed at a lower side of the outer case 40. The filter member 70 is disposed below the bottom plate 62 of the outer case 40 to filter the air discharged from the outer case 40.

The base 80 supports the outer case 40 and the filter member 70 and functions to guide the air passing through the filter member 70 in a lateral direction. A filter hole 83 for installing the filter member 70 is formed in the upper surface of the base 80, and a plurality of filter supporting brackets 81 are disposed below the filter hole 83 so as to support the filter member 70 and guide the air passing through the filter member 70 in a lateral direction. The plurality of filter supporting brackets 81 are respectively formed into a thin band shape and arranged to be parallel with an air discharging direction. At upper outer circumference of the base 80, a plurality of base brackets 89 are formed to be correspondent to the plurality of case brackets 69 formed at the lower outer case 60. Further, each of the base brackets 89 is formed with a fixing coupling hole 89a. Therefore, the lower outer case 60 and the base 80 can be coupled to each other by using the plurality of case brackets 69, the base brackets 89 and fastening elements.

Hereinafter, an operation of the fan motor case assembly 1 of the present disclosure will be described with reference to Figs. 4 to 6.

When power is applied to the fan motor 10, the air is sucked by the fan motor. The air is sucked through the inlet air opening 32 formed at the upper end of the inner case 30 and the air inlet 12 formed at the upper end of the fan motor 10 into the fan motor 10 (arrow mark A). The air sucked into the fan motor 10 is discharged through the air outlets 16 formed at the lower side of the fan motor 10 (arrow mark B).

The air discharged through the plurality of air outlets 16 comes through the plurality of through-holes 22 formed at the porous case 20 to the outside of the porous case 20 (arrow mark C). The air which has passed through the porous case 20 collides with the side surface 31 of the inner case 30 and is then moved downwardly. The air which has moved in the downward direction of the inner case 30 passes through the plurality of through holes 26 of the porous plate 25 disposed at the lower side of the inner case 30 (arrow mark D).

The air which has passed through the porous plate 25 moves along the bottom plate 62 of the lower outer case 60 and is then discharged through the bottom space 68 formed between the lower portion 31 a of the inner case 30 and the bottom plate 62 (arrow mark E). The air discharged through the bottom space 68 is divided by the blocking member 35 and then introduced into the first and second front air paths 91 a and 92a.

The air introduced into the first front air path 91 a is moved upwardly by the guiding member 37 and then flows in the first rear air path 91b through the upper gap 93 between the upper end 37a of the guiding member 37 and the upper surface of the upper outer case 50 (arrow F1). The air flowing in the first rear air path 98b is moved downwardly along the guiding member 37 and then discharged through the air hole 67a formed in the bottom plate 62 (arrow mark G 1). Like the air introduced into the first front air path 91 a, the air introduced into the second front air path 92a is also discharged to the air hole 67b through the upper gap 93 and the second rear air path 92b (arrow mark F2 and G2).

The air discharged through the air holes 67a and 67b is introduced into the filter member 70 disposed below the bottom plate 62 of the lower outer case 60 (arrow mark H). The air which has passed through the filter member 70 is discharged to the side surface of the base 80 through discharging paths 82 formed by the plurality of filter supporting brackets 81 disposed at the lower side of the filter member 70 (arrow mark I).

Therefore, in the fan motor case assembly 1 of the present disclosure, the air is sucked from the upper side of the assembly 1 and then discharged to the lower side thereof

According to the present disclosure, the air discharged from the fan motor 10 is passed through the plurality of through-holes 22 and 26 and the long paths including the side surface and the lower surface of the fan motor 10 and the two air paths and then discharged to the outside of the fan motor case assembly 1. Thus, the noise generated by the air discharged from the fan motor 10 can be effectively reduced.

In addition, in the fan motor case assembly 1 of the present disclosure, almost the whole spaces between the inner case 30 and the outer case 40 form the paths for the discharged air. Thus, the space formed by the motor cases can be effectively utilized.

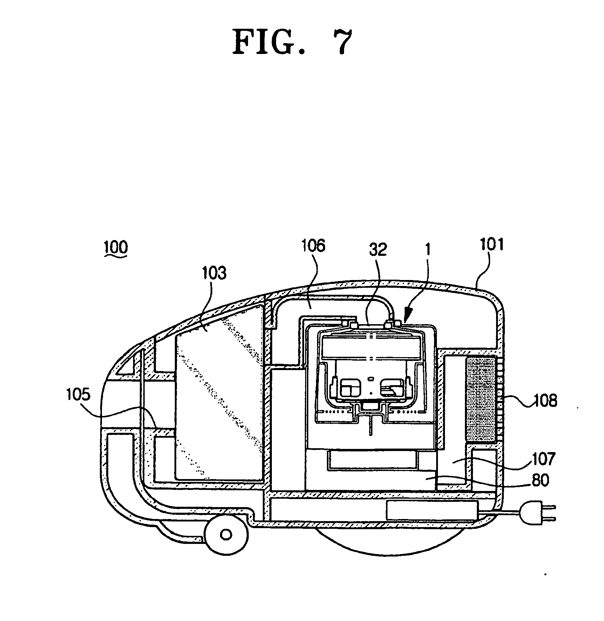

Fig. 7 is a schematic cross-sectional view illustrating a vacuum cleaner using the fan motor case assembly according to the present disclosure.

Referring to Fig. 7, the fan motor case assembly 1 of the present disclosure can be employed in a main body 101 of the vacuum cleaner 100 to generate sucking force for sucking dirt and dust together with the air. A dirt and dust collector 103 for separating the dirt and dust from the sucked air and storing the separated dirt and dust is disposed at a front portion of the fan motor case assembly 1. The dirt and dust collector 103 communicates with inlet air opening 32 of the fan motor case assembly 1 via a connecting pipe 106. A connecting port 105 which is connected with a sucking brush (not shown) for sucking the dirt and dust from a floor to be cleaned is formed at a front end of the dirt and dust collector 103. Further, the base 80 disposed at a lower side of the fan motor case assembly 1 is connected with a duct 107 to communicate with a grill 108 of the main body 101.

Therefore, when the fan motor is operated, the sucking force is generated and the external air containing the dirt and dust is sucked through the sucking brush (not shown) into the dirt and dust collector 103. While the sucked air is passed through the dirt and dust collector 103, the dirt and dust is separated from the air and stored in the dirt and dust collector 103, and only the cleaned air is discharged from the dirt and dust collector 103. The air discharged from the dirt and dust collector 103 is sucked into the inlet air opening 32 of the fan motor case assembly 1. The air introduced into the fan motor case assembly 1 is passed through the fan motor 10 (referring to Fig. 2) and a plurality of air paths 91 and 92 (referring to Fig. 5) and then discharged to the side surface of the base 80. The air discharged from the side surface of the base 80 is discharged to the outside of the main body 10 1 through the duct 107 and the grill 108. Herein, the description of the air paths for the air introduced into the fan motor case assembly 1 will be omitted.

As shown in Fig. 7, the fan motor case assembly 1 according to the embodiment of the present disclosure may be employed in a canister vacuum cleaner and also employed in an upright vacuum cleaner.

As described above, since the fan motor case assembly discharges the air discharged from the fan motor through a plurality of air paths, the noise generated by the discharged air can be effectively reduced.

Further, in the fan motor case assembly 1 of the present disclosure, since the plurality of air paths are formed to be longer by using the lower surface and the side surface of the fan motor and the side surface of the inner case, the noise generated by the discharged air can be minimized.

Further, in the fan motor case assembly 1 of the present disclosure, since the plurality of air paths are formed by using the space between the inner and outer cases, the space of the case assembly can be effectively utilized.

While the embodiments of the present disclosure have been described, additional variations and modifications of the embodiments may occur to those skilled in the art once they have studied the basic inventive concepts. Therefore, it is intended that the appended claims shall be construed to include both the above embodiments and all such variations and modifications that fall within the scope of the disclosure.

## Claims

1. A fan motor case assembly, comprising
a fan motor (10);
a case (20) formed to enclose a part of the fan motor (10) from which air is discharged and having a plurality of through-holes (22);
an inner case (30) formed to enclose the fan motor (10) and the case (20) and guiding the air which has passed through the case (20) to be directed downwardly;
an outer case (40) disposed to enclose the inner case (30) with a gap; **characterised in that** said case (20) is a porous case (20) and **in that**
a plurality of air paths (91, 92) are formed between the outer case (40) and the inner case (30) so as to discharge the air discharged from a lower side of the inner case (30) to an outside of the outer case (40).

2. The fan motor case assembly of claim 1, further comprising a porous plate (25) disposed at a lower side of the inner case (30).

3. The fan motor case assembly of claim 1 or 2, wherein the plurality of air paths (91, 92) are formed by a plurality of blocking members (35, 36).

4. The fan motor case assembly of any of claims 1 to 3, wherein the plurality of air paths (91, 92) are respectively provided with a guiding member (37, 38) for guiding the air discharged from the inner case (30) to be moved upwardly and then discharged to a lower side of the outer case (40).

5. The fan motor case assembly of any one of claims 1 to 4, wherein the plurality of air paths (91, 92) comprises two air paths.

6. The fan motor case assembly of any of claims 1 to 5, further comprising a filter member (70) disposed at the lower side of the outer case (40) to filter the air discharged from the outer case (40).

7. The fan motor case assembly of claim 6, further comprising a base (80) disposed at a lower side of the filter member (70) to guide the air which has passed through the filter member (70) to be discharged to a side surface thereof.

8. The fan motor case assembly of claim 1, further comprising:
a bottom plate (62) for supporting a lower end of the inner case (30).

9. The fan motor case assembly of claim 8, wherein the plurality of air paths (91, 92) comprises;
a plurality of blocking members (35, 36) formed to protrude from the inner case (30) and to contact an upper surface and a side surface of the outer case (40); and
a guiding member (37, 38) formed to protrude from the inner case (30) between the plurality of blocking members (35, 36) and to contact the side surface of the outer case (40) and also formed to be apart from the upper surface of the outer case (40).

10. The fan motor case assembly of claim 9, wherein the bottom plate (62) between the blocking member (35, 36) and the guiding member (37, 38) is formed with an air hole(67a, 67b).

11. The fan motor case assembly of any of claims 8 to 10, further comprising a porous plate (25) disposed between the lower end of the inner case (30) and the bottom plate (62).

12. The fan motor case assembly of any of claims 8 to 11, further comprising;
a filter member (70) disposed at a lower side of the bottom plate (62); and
a base (80) for supporting the outer case (40) and the filter member (70) and for discharging the air passed through the filter member (70) to a side surface thereof,
wherein a lower end of the outer case (40) is more downwardly extended than the bottom plate (62).

13. The fan motor case assembly of any of claims 8 to 12, further comprising a lower buffer member (19) disposed at the bottom plate (62) of the outer case (40) to support the fan motor (10).

14. The fan motor case assembly of any of claims 8 to 13, wherein the outer case (40) comprises an upper outer case (50) and a lower outer case (60).

## Patentansprüche

1. Gebläsemotorgehäuse-Anordnung mit
einem Gebläsemotor (10);
einem Gehäuse (20), das zum Umschließen eines Teils des Gebläsemotors (10) ausgebildet ist, von dem Luft abströmt, und das eine Vielzahl von Durchgangslöchern (22) aufweist;
einem inneren Gehäuse (30), das zum Umschließen des Gebläsemotors (10) und des Gehäuses (20) ausgebildet ist und die Luft, die durch das Gehäuse (20) geströmt ist, so führt, dass sie nach unten gelenkt wird;
einem äußeren Gehäuse (40), das zum Umschließen des inneren Gehäuses (30) mit einem Spalt angeordnet ist;
**dadurch gekennzeichnet, dass** das Gehäuse (20) ein poröses Gehäuse (20) ist; und
dass eine Vielzahl von Luftwegen (91, 92) zwischen dem äußeren Gehäuse (40) und dem inneren Gehäuse (30) ausgebildet sind, um die von einer Unterseite des inneren Gehäuses (30) ausgestoßene Luft zu einer Außenseite des äußeren Gehäuses (40) auszustoßen.

2. Gebläsemotorgehäuse-Anordnung nach Anspruch 1, die ferner eine poröse Platte (25) aufweist, die an einer Unterseite des inneren Gehäuses (30) angeordnet ist.

3. Gebläsemotorgehäuse-Anordnung nach Anspruch 1 oder 2, wobei die Vielzahl von Luftwegen (91, 92) durch eine Vielzahl von Sperrelementen (35, 36) ausgebildet sind.

4. Gebläsemotorgehäuse-Anordnung nach einem der Ansprüche 1 bis 3, wobei die Vielzahl von Luftwegen (91, 92) jeweils mit einem Führungselement (37, 38) zum Führen der aus dem inneren Gehäuse (30) ausgestoßenen Luft vorgesehen sind, so dass sie nach oben bewegt und dann zu einer Unterseite des äußeren Gehäuses (40) abgeführt wird.

5. Gebläsemotorgehäuse-Anordnung nach einem der Ansprüche 1 bis 4, wobei die Vielzahl von Luftwegen (91, 92) zwei Luftwege aufweist.

6. Gebläsemotorgehäuse-Anordnung nach einem der Ansprüche 1 bis 5, die ferner ein Filterelement (70) aufweist, das an der Unterseite des äußeren Gehäuses (40) angeordnet ist, um die Luft zu filtern, die aus dem äußeren Gehäuse (40) abgeführt wird.

7. Gebläsemotorgehäuse-Anordnung nach Anspruch 6, die ferner eine Basis (80) aufweist, die an einer Unterseite des Filterelements (70) angeordnet ist, um die Luft, die durch das Filterelement (70) geströmt ist, so zu führen, dass sie zu einer Seitenfläche derselben ausgelassen wird.

8. Gebläsemotorgehäuse-Anordnung nach Anspruch 1, die ferner aufweist:
eine Bodenplatte (62) zum Abstützen eines unteren Endes des inneren Gehäuses (30).

9. Gebläsemotorgehäuse-Anordnung nach Anspruch 8, wobei die Vielzahl von Luftwegen (91, 92) aufweist:
eine Vielzahl von Sperrelementen (35, 36), die so ausgebildet sind, dass sie vom inneren Gehäuse (30) vorstehen und eine obere Oberfläche und eine Seitenfläche des äußeren Gehäuses (40) berühren; und
ein Führungselement (37, 38), das so ausgebildet ist, dass es vom inneren Gehäuse (30) zwischen der Vielzahl von Sperrelementen (35, 36) vorsteht und die Seitenfläche des äußeren Gehäuses (40) berührt, und auch so ausgebildet ist, dass es von der oberen Oberfläche des äußeren Gehäuses (40) entfernt ist.

10. Gebläsemotorgehäuse-Anordnung nach Anspruch 9, wobei die Bodenplatte (62) zwischen dem Sperrelement (35, 36) und dem Führungselement (37, 38) mit einem Luftloch (67a, 67b) ausgebildet ist.

11. Gebläsemotorgehäuse-Anordnung nach einem der Ansprüche 8 bis 10, die ferner eine poröse Platte (25) aufweist, die zwischen dem unteren Ende des inneren Gehäuses (30) und der Bodenplatte (62) angeordnet ist.

12. Gebläsemotorgehäuse-Anordnung nach einem der Ansprüche 8 bis 11, die ferner aufweist:
ein Filterelement (70), das an einer Unterseite der Bodenplatte (62) angeordnet ist; und
eine Basis (80) zum Abstützen des äußeren Gehäuses (40) und des Filterelements (70) und zum Auslassen der Luft, die durch das Filterelement (70) geströmt ist, zu einer Seitenfläche derselben,
wobei ein unteres Ende des äußeren Gehäuses (40) sich weiter nach unten erstreckt als die Bodenplatte (62).

13. Gebläsemotorgehäuse-Anordnung nach einem der Ansprüche 8 bis 12, die ferner ein unteres Pufferelement (19) aufweist, das an der Bodenplatte (62) des äußeren Gehäuses (40) angeordnet ist, um den Gebläsemotor (10) abzustützen.

14. Gebläsemotorgehäuse-Anordnung nach einem der Ansprüche 8 bis 13, wobei das äußere Gehäuse (40) ein oberes äußeres Gehäuse (50) und ein unteres äußeres Gehäuse (60) aufweist.

## Revendications

1. Ensemble de carter de moteur de ventilateur, comprenant :
un moteur de ventilateur (10) ;
un carter (20) conçu pour enfermer une partie du moteur de ventilateur (10), duquel l'air est évacué et possédant une pluralité d'orifices traversants (22) ;
un carter intérieur (30) conçu pour enfermer le moteur de ventilateur (10) et le carter (20) et pour guider l'air qui a traversé le carter (20) pour le diriger vers le bas ;
un carter extérieur (40) disposé de manière à enfermer le carter intérieur (30) avec un espacement ;
**caractérisé en ce que** ledit carter (20) est un carter poreux (20), et **en ce qu'**une pluralité de parcours d'air (91, 92) est formée entre le carter extérieur (40) et le carter intérieur (30), de manière à évacuer l'air évacué depuis un côté inférieur du carter intérieur (30) vers un côté extérieur du carter extérieur (40).

2. Ensemble de carter de moteur de ventilateur selon la revendication 1, **caractérisé en ce qu'**il comprend en outre une plaque poreuse (25) disposée sur un côté inférieur du carter intérieur (30).

3. Ensemble de carter de moteur de ventilateur selon la revendication 1 ou 2, **caractérisé en ce que** la pluralité de parcours d'air (91, 92) est formée par une pluralité d'éléments de blocage (35, 36).

4. Ensemble de carter de moteur de ventilateur selon l'une quelconque des revendications 1 à 3, **caractérisé en ce que** la pluralité de parcours d'air (91, 92) est respectivement pourvue d'un élément de guidage (37, 38) pour guider l'air évacué du carter intérieur (30) pour être déplacé vers le haut puis évacué vers un côté inférieur du carter extérieur (40).

5. Ensemble de carter de moteur de ventilateur selon l'une quelconque des revendications 1 à 4, **caractérisé en ce que** la pluralité de parcours d'air (91, 92) comprend deux parcours d'air.

6. Ensemble de carter de moteur de ventilateur selon l'une quelconque des revendications 1 à 5, **caractérisé en ce qu'**il comprend en outre un élément filtrant (70) disposé sur le côté inférieur du carter extérieur (40) pour filtrer l'air évacué du carter extérieur (40).

7. Ensemble de carter de moteur de ventilateur selon la revendication 6, **caractérisé en ce qu'**il comprend en outre une base (80) disposée sur un côté inférieur de l'élément filtrant (70) pour guider l'air qui a traversé l'élément filtrant (70) pour être évacué vers une surface latérale de ce dernier.

8. Ensemble de carter de moteur de ventilateur selon la revendication 1, **caractérisé en ce qu'**il comprend en outre une plaque de fond (62) pour supporter une extrémité inférieure du carter intérieur (30).

9. Ensemble de carter de moteur de ventilateur selon la revendication 8, **caractérisé en ce que** la pluralité de parcours d'air (91, 92) comprend :
une pluralité d'éléments de blocage (35, 36) formés de manière à faire saillie du carter intérieur (30) et à entrer en contact avec une surface supérieure et une surface latérale du carter extérieur (40) ; et
un élément de guidage (37, 38) formé de manière à faire saillie du carter intérieur (30) entre la pluralité d'éléments de blocage (35, 36) et à entrer en contact avec la surface latérale du carter extérieur (40), et également formé de manière à être distant de la surface supérieure du carter extérieur (40).

10. Ensemble de carter de moteur de ventilateur selon la revendication 9, **caractérisé en ce que** la plaque de fond (62) est pourvue d'un orifice de passage d'air (67a, 67b) entre l'élément de blocage (35, 36) et l'élément de guidage (37, 38).

11. Ensemble de carter de moteur de ventilateur selon l'une quelconque des revendications 8 à 10, **caractérisé en ce qu'**il comprend en outre une plaque poreuse (25) disposée entre l'extrémité inférieure du carter intérieur (30) et la plaque de fond (62).

12. Ensemble de carter de moteur de ventilateur selon l'une quelconque des revendications 8 à 11, **caractérisé en ce qu'**il comprend en outre :
un élément filtrant (70) disposé sur un côté inférieur de la plaque de fond (62) ;
et une base (80) pour supporter le carter extérieur (40) et l'élément filtrant (70) et pour évacuer l'air ayant traversé l'élément filtrant (70) vers une surface latérale de ce dernier,
sachant qu'une extrémité inférieure du carter extérieur (40) s'étend plus vers le bas que la plaque de fond (62).

13. Ensemble de carter de moteur de ventilateur selon l'une quelconque des revendications 8 à 12, **caractérisé en ce qu'**il comprend en outre un élément amortisseur inférieur (19) disposé sur la plaque de fond (62) du carter extérieur (40) pour supporter le moteur de ventilateur (10).

14. Ensemble de carter de moteur de ventilateur selon l'une quelconque des revendications 8 à 13, **caractérisé en ce que** le carter extérieur (40) comprend un carter extérieur supérieur (50) et un carter extérieur inférieur (60).
